# EUROPEAN PATENT SPECIFICATION

(11) **EP 2 433 198 B1**
(45) Date of publication and mention of the grant of the patent: **03.09.2014**
(21) Application number: 10777236.0
(22) Date of filing: 20.05.2010
(51) Int. Cl.: G06F 1/12, G06F 17/40

(54) **SYNCHRONISATION AND TRIGGER DISTRIBUTION ACROSS INSTRUMENTATION NETWORKS**
SYNCHRONISATION UND AUSLÖSERVERTEILUNG ÜBER INSTRUMENTATIONSNETZWERKE
SYNCHRONISATION ET DÉCLENCHEMENT DE DISTRIBUTION À TRAVERS DES RÉSEAUX D'INSTRUMENTATION

(30) Priority: 20.05.2009 US 179904 P
(43) Date of publication of application: 28.03.2012
(73) Proprietor: Chronologic Pty Ltd, Adelaide, SA 5000 (AU)
(72) Inventor: FOSTER, Peter Graham, Kent Town, South Australia 5067 (AU)
(74) Representative: Davies, Robert Ean
(86) International application number: PCT/AU2010/000608
(87) International publication number: WO 2010/132947

(56) References cited:
- EP-A2- 1 445 681
- WO-A1-2008/138052
- WO-A1-2008/138053
- US-A1- 2003 041 274
- US-A1- 2004 088 445
- UNIVERSAL SERIAL BUS 3.0 SPECIFICATION, [Online] 12 November 2008, XP007906852 Retrieved from the Internet: <URL:http://www.usb.org/developersldocs/usb _30_spec_060910.zip> [retrieved on 2010-06-16]

## Description

### FIELD OF THE INVENTION

The present invention relates to a method and apparatus for providing a synchronization and timing system, with connectivity based on revision three of the Universal Serial Bus (USB) architecture (or USB 3.0), of particular but by no means exclusive use in providing clocks, data acquisition and automation and control of test and measurement equipment, instrumentation interfaces and process control equipment, synchronized to an essentially arbitrary degree in either a local environment or in a distributed scheme.

### BACKGROUND OF THE INVENTION

WO 2008/138052 A1 describes a method for reducing triggering latency in USB data acquisition. The method involves synchronous USB devices storing acquired data with time stamp information to their respective memories, a trigger device responding to a command by sending a first message to a USB host controller that includes data indicative of a time of receipt of the command, the USB host controller responding to the first message by sending the USB devices a second message including data indicative of the time of receipt of the command by the trigger device, and the USB devices responding to the second message by sending the acquired data stored in their respective memories to the USB host controller commencing from a location in memory corresponding to the time of receipt or a next available location.

The USB specification up to and including revision 2.0 was intended to facilitate the interoperation of devices from different vendors in an open architecture. USB 2.0 data is encoded using differential signalling (*viz.* in which two wires transfer the information) in the form of the difference between the signal levels of those two wires. The USB 2.0 specification is intended as an enhancement to the PC architecture, spanning portable, desktop and home environments. However, USB was user focussed so the USB 2.0 specification lacked a mechanism for synchronising devices to any great precision. Several proposals attempted to address this and other deficiencies. For example, US Patent No. 6,343,364 (Leydier et al.*)* discloses an example of frequency locking to USB traffic, which is directed toward a smart card reader. This document teaches a local, free-running clock that is compared to USB SYNC and packet ID streams; its period is updated to match this frequency, resulting in a local clock with a nominal frequency of 1.5 MHz. This provides a degree of synchronization sufficient to read smart card information into a host PC but, as this approach is directed to a smart card reader, inter-device synchronization is not addressed.

WO 2007/092997 (Foster et al.*)* discloses a synchronized USB device that allows the generation of accurate clock frequencies on board the USB device regardless of the accuracy of the clock in the Host PC. The USB SOF packet is decoded by the USB device, and treated as a clock carrier signal instead of acting as a clock reference.

The carrier signal, once decoded from the USB traffic, is combined with a scaling factor to generate synchronization information and hence to synthesize a local clock signal with precise control of the clock frequency. In this way, the frequency of the local clock signal can be more accurate than the somewhat ambiguous frequency of the carrier signal.

This arrangement is said to be able to produce a local clock signal to arbitrarily high frequencies, such as a clock frequency of tens of megahertz, and thus to ensure that the local clock of each device connected to a given USB is synchronized in frequency. US Application No. 10/620,769 also teaches a method and apparatus to further synchronize multiple local clocks in phase by measurement of signal propagation time from the host to each device and provision of clock phase compensation on each of the USB devices.

US Patent Application 12/279,328 (Foster *et. al*.) teaches synchronisation of the local clocks of a plurality of USB devices to a timebase received from another interface. In one embodiment, a USB device contains a local clock that is synchronised to an externally provided time signature across Ethernet using the IEEE-1588 protocol. In yet another embodiment the USB device's clock is synchronised to a timebase derived from a Global Positioning System (GPS) synchronised clock.

All of the above systems work within the bounds of conventional USB 2.0 and as such are limited in several areas. USB 2.0 is limited in range by the device response timeout. This is the window of time that the USB Host Controller allocates for receipt of a signal from a given USB device in response to a request from the USB Host Controller. The physical reach of USB 2.0 is therefore approximately 25 m.

The USB 3.0 specification was released in November 2008 and is also focussed on consumer applications. The USB 3.0 specification makes significant changes to the architecture of USB. In particular, the background art synchronisation schemes discussed above will not work with the new 5 Gb/s protocol (termed 'SuperSpeed USB') because it does away with the broadcast mechanism for SOF packets.

USB 3.0 defines two parallel and independent USB busses on the same connection cable. Firstly, the USB 2.0 bus remains unchanged (for backward compatibility) and offers Low Speed (1.5 Mb/s), Full Speed (12 Mb/s) and High Speed (480 Mb/s) protocols. The second bus - for 5 Gb/s traffic - provides the SuperSpeed USB. These busses operate independently, except that operation of the busses to a given USB device is mutually exclusive. That is, if a SuperSpeed connection is possible, then the USB 2.0 bus in disconnected to that device.

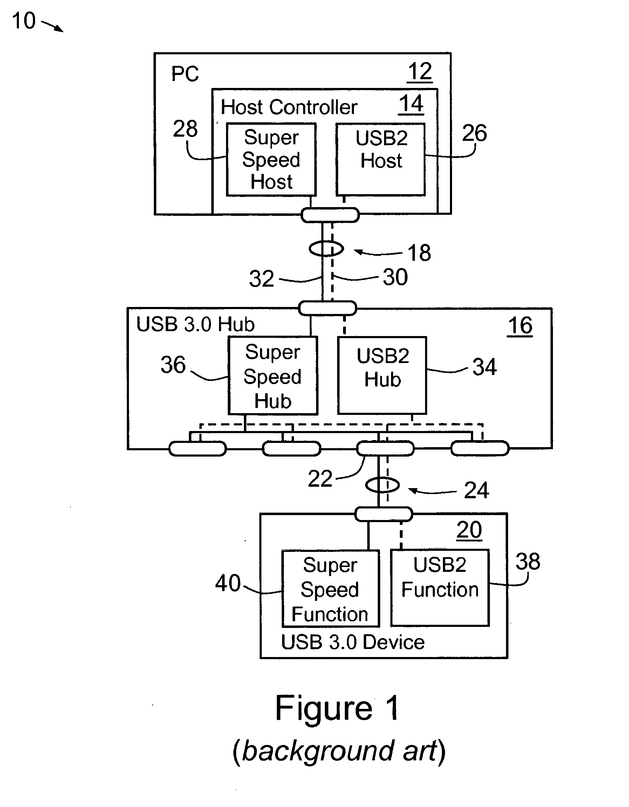

The dual-bus architecture of USB 3.0 is depicted schematically at 10 in figure 1. Personal Computer 12, containing USB Host Controller 14, is connected to USB 3.0 Hub 16 by first USB 3.0-compliant cable 18; USB 3.0 device 20 is connected to a downstream port 22 of USB 3.0 Hub 16 by second USB 3.0-compliant cable 24.

USB Host Controller 14 contains both a USB 2.0 Host 26 and a SuperSpeed Host 28. These two hosts 26, 28 are independent of one another, and each host 26, 28 is capable of connecting up to 127 devices (including hubs). USB 3.0-compliant cables are compound cables, containing a USB 2.0-compliant cable and a series of shielded conductors capable of transmitting SuperSpeed signals. Hence, USB 3.0-compliant cable 18 comprises USB 2.0-compliant cable 30 and shielded conductors 32.

USB 3.0 Hub 16 contains both a USB 2.0 Hub function 34 and a SuperSpeed Hub function 36, each connected directly to its respective Host 26, 28 by compound cable 18. USB 3.0 device 20 contains both a USB 2.0 device function 38 and a SuperSpeed device function 40, each connected back to its respective hub function 34, 36 of USB 3.0 Hub 16 by compound cable 24.

At enumeration of USB 3.0 device 20, SuperSpeed Host 28 checks for the presence of a SuperSpeed device function (40). If a SuperSpeed device is found, then a connection is established. If a SuperSpeed device is not found (as in the case where only a USB 2.0 device is connected to port 22), then the USB 2.0 Host 26 checks for the presence of a USB 2.0 device function (38) at device 20. Once the Host Controller 14 determines which device function is connected, it tells the USB 3.0 Hub 16 to only enable communication for downstream port 22 corresponding to whether the USB 2.0 device function 38 or SuperSpeed device function 40 is attached. This means that only one of the two parallel busses is in operation at any one time to an end device such as USB 3.0 device 20.

Furthermore, SuperSpeed USB has a different architecture from that of the USB 2.0 bus. Very high speed communication systems consume large amounts of power owing to high bit rates. A design requirement of SuperSpeed USB was lower power consumption, to extend the battery life of user devices. This has resulted in a change from the previous broadcast design of the USB 2.0: SuperSpeed is not a broadcast bus, but rather directs communication packets to a specific node in the system and shuts down communication on idle links.

This significantly affects any extension of the synchronisation schemes of, for example, US Patent Application No. 12/279,328, whose method and apparatus for synchronising devices is based on a broadcast clock carrier signal that is delivered to each device on the bus, which is unsuitable in SuperSpeed USB.

A SuperSpeed Hub function acts as a device to the host (or upstream port) and as a host to the device (or downstream port). This means that the SuperSpeed Hub function acts to buffer and schedule transactions on its downstream ports rather than merely acting as a repeater. Similarly, the SuperSpeed Hub function does so with scheduling transmissions on the upstream port. A heavily burdened Hub function can therefore add significant non-deterministic delays in packet transmission through the system. This also precludes the use of USB 2.0 synchronisation schemes such as that of US Patent Application No. 12/279,328 from operating on SuperSpeed USB.

The crude Isochronous synchronisation of USB 2.0 has been significantly improved in the USB 3.0 specification. Opening an Isochronous communication pipe between a Host Controller and a USB device guarantees a fixed bandwidth allocation in each Service Interval for the communication pipe. The Isochronous Protocol of USB 3.0 contains a so-called Isochronous Timestamp Packet (ITP), which is sent at somewhat regular intervals to each Isochronous Endpoint and which contains a timestamp of the beginning of ITP transmission by the USB Host Physical Layer (Phy) in the time domain of the Host Controller. The Isochronous Timestamp Packet is accurate to about 25 ns. SuperSpeed USB shuts down idle links to conserve power, but links must be active in order to receive an Isochronous Timestamp Packet. The Host Controller must therefore guarantee that all links to a device are in full active mode (termed power state U0) before transmission of the Isochronous Timestamp Packet.

Unfortunately the Isochronous Timestamp packet can be delayed in propagation down the USB network. USB 3.0 also does not provide a way of determining the propagation time of packets in SuperSpeed USB and hence no way of accurately knowing the phase relationship between time domains on different USB devices. Phase differences of several hundred nanoseconds are expected to be a best case scenario with SuperSpeed USB making it impractical for instrumentation or other precision timing requirements.

US Patent No. 5,566,180 (Eidson et al.) discloses a method of synchronising clocks in which a series of devices on a communication network transmit their local time to each other and network propagation time is determined by the ensemble of messages. Further disclosures by Eidson (US Patents Nos. 6,278,710, 6,665,316, 6,741,952 and 7,251,199) extend this concept but merely work toward a synchronisation scheme in which a constant stream of synchronising messages are transferred between each of the nodes of a distributed instrument network via Ethernet. This continual messaging consumes bandwidth and limits the accuracy of the possible synchronisation to several hundred nano-seconds in a point-to-point arrangement and substantially lower accuracy (typically micro-seconds) in a conventional switched subnet.

It should be understood that the terms 'clock signals' and 'synchronisation' in this disclosure are used to refer to clock signals, trigger signals, delay compensation information and propagation time measurement messages. It should also be understood that a 'notion of time' in this disclosure is used to denote an epoch or 'real time' and can also be used to refer to the combination of a clock signal and an associated epoch.

### SUMMARY OF THE INVENTION

It is a general object of the present invention to enable precision synchronisation of a plurality USB devices, up to a predefined maximum, according to the USB3 Specification.

According to a first broad aspect, the present invention provides a system for synchronising the operation of a measurement instrument having a microcontroller, a local oscillator and function circuitry to an external timebase, the system comprising:
a USB Host Controller to which the local oscillator is attachable;
an interrupt generator adapted to respond to receipt of one or more Isochronous Timestamp Packets by generating respective interrupts and passing the interrupts to the microcontroller; and
a timer or counter adapted to measure an interval between receptions of the Isochronous Timestamp Packets in a time domain of the local oscillator (from which, if desired, information can be derived about a frequency of the local oscillator with respect to the timestamped Isochronous Timestamp Packets);
wherein the system is adapted to control the instrument to open one or more Isochronous communication pipes or endpoints to the USB Host Controller, to ensure that the instrument is in link state U0 in preparation for receiving a plurality of Isochronous Timestamp Packets (ITPs) and to control the USB Host Controller to send a plurality of the Isochronous Timestamp Packets to the Isochronous communication pipes or endpoints, the microcontroller is configured to respond to each of the plurality of interrupts (such as with an interrupt service routine provided therein) by generating an output signal adapted to be used as a synchronization reference signal, and the instrument is configured to create a mapping between respective local times of a plurality of operations or events of the function circuitry of the instrument and a time domain of the USB Host Controller.

In one embodiment, the system comprises the instrument. In a particular embodiment, the instrument is a SuperSpeed USB device.

Thus, the operation of, for example, a SuperSpeed USB device can be synchronised, as each of the operations (or events) can be mapped back to the time domain of the USB Host Controller.

The microcontroller may be further configured to read respective timestamps from each of a selected pair of the Isochronous Timestamp Packets, and calculate a period between the selected pair of the Isochronous Timestamp Packets from their respective timestamps (and, further, may optionally form a comparison between the interval between selected successive Isochronous Timestamp Packets as determined by the timer or counter and the calculated period.

Thus, knowledge of the time domain of the USB Host Controller may be improved

In one embodiment, the system is further adapted system to omit from the comparison any of the Isochronous Timestamp Packets that contains a Packet_Delayed flag.

In one embodiment, the microcontroller is further configured to make a plurality of such readings, and to generate a time series of determinations of the local clock period and timestamps.

The microcontroller or USB Host Controller may be adapted to statistically analyze the time series and to improve synchronisation accuracy therefrom.

Also according to this aspect there is provided a method of synchronising the operation of a measurement instrument
to an external timebase, the method comprising:
the instrument, having a microcontroller and a local oscillator attached to a USB Host Controller, opening one or more Isochronous communication pipes or endpoints to the USB Host Controller;
ensuring that the instrument is in link state U0 in preparation for receiving a plurality of Isochronous Timestamp Packets (ITP);
the USB Host Controller sending a plurality of Isochronous Timestamp Packets to the Isochronous communication pipes or endpoints;
the instrument receiving the plurality of Isochronous Timestamp Packets and in response generating a respective plurality of interrupts and passing the interrupts to the microcontroller;
measuring a time interval between receptions of the Isochronous Timestamp Packets in a time domain of the local oscillator (and optionally deriving information about the frequency of the local oscillator with respect to the timestamped Isochronous Timestamp Packet therefrom); and
the instrument creating a mapping between respective local times of a plurality of operations or events of function circuitry of the instrument and a time domain of the USB Host Controller.

In one embodiment, the instrument is a SuperSpeed USB device.

The method may comprise the microcontroller responding to each of the interrupts (such as with an interrupt service routine provided therein) by generating an output signal adapted to be used as a synchronization reference signal for a plurality or all of the Isochronous Timestamp Packets, and deriving information about the frequency of the local oscillator with respect to the timestamped Isochronous Timestamp Packet therefrom with a first counter/timer measuring the period of interval between reception of successive the output signals.

In one embodiment, the method includes mapping each of the operations or events back to the time domain of the USB Host Controller.

In one embodiment, the instrument includes instrumentation and measurement or data acquisition circuitry.

In one embodiment, the method further comprises:
reading respective timestamps from each of the plurality of Isochronous Timestamp Packets; and
calculating a period between a selected successive pair of the Isochronous Timestamp Packets from their respective timestamps.

The method may include forming a comparison between the interval between the selected successive Isochronous Timestamp Packets as determined by the timer or counter and the calculated period.

The method may include omitting any of the Isochronous Timestamp Packets that contain a Packet_Delayed flag from the comparison.

The method may comprise making a plurality of the readings and generating a time series of determinations of the local clock period and timestamps.

The method may further comprise statistically analyzing the time series and improving synchronisation accuracy therefrom.

In a particular embodiment, the interrupts result in interrupt service routines generated in response to the detection of an Isochronous Timestamp Packet by the SuperSpeed USB device.

In a particular embodiment, the interrupts are hardware interrupts generated in response to the detection of an Isochronous Timestamp Packet by the SuperSpeed USB device.

In one embodiment, the method further comprises:
measuring signal propagation time from a selected point in a USB network containing the SuperSpeed USB device to the SuperSpeed USB device; and
adjusting the phase of the local oscillator;
whereby the local oscillator is synchronised to a desired phase.

In an embodiment, the timer/counter uses only those of the Isochronous Timestamp Packets whose transmission was not delayed in a USB network. Furthermore statistical means may be used to improve the accuracy of measurements and improve synchronisation. This may be by averaging the measurements of the interval between reception of successive the output signals, or by performing a statistical analysis on the set of such measurements of the time intervals.

In a particular embodiment, the method includes measuring the interval between receptions of the synchonisation reference signals with a counter/timer function clocked from the local oscillator.

In an embodiment, the time interval used to measure the frequency of the local oscillator is an interval between receptions of successive Isochronous Timestamp Packets. The accuracy of measurement of the local oscillator frequency may be increased by measurement over multiple successive intervals and using statistical analysis.

In one embodiment, the microcontroller has timer/counter functionality. It will be readily understood by those skilled in the art that such counter/timer functionality can be deployed in logic devices external to the microcontroller, for example Field Programmable Gate Arrays (FPGA) or Complex Programmable Logic Devices (CPLD) or a dedicated counter/timer circuit.

In one embodiment, the microcontroller has interrupt service routine capability whereby the interrupt service routines can be called or triggered in response to detection of the Isochronous Timestamp Packets.

The interrupts may be software interrupts, but in one embodiment, the interrupts are hardware interrupts wherein there is minimal latency in generating the required output from an Interrupt Service Routine (ISR).

In one embodiment, the local oscillator is a free-running local oscillator, but it will be understood by those skilled in the art that the local oscillator may assume alternative forms and comprise, for example, a Voltage Controlled Crystal Oscillator (VCXO), a Temperature Compensated Crystal Oscillator (TCXO), an Oven Controlled Crystal Oscillators (OCXO) or a multi-tap clock.

It will also be understood by those skilled in the art that the counter/timer circuitry may not be clocked directly from the local oscillator but instead via a clock source divided or multiplied in frequency from the local oscillator.

The method of this aspect may be used to synchronise a plurality of USB devices attached to a common USB host controller, whereby the operations or functions of the USB devices are synchronised to an arbitrarily precise degree. Furthermore the method may include determining the propagation time of the timestamped Isochronous Timestamp Packet from the USB Host Controller to the USB device according to any of such method of the present invention described herein, depending on the particular synchronisation channel employed in the respective embodiment.

It will be understood by those skilled in the art that measuring the period between receptions of successive carrier signals with respect to the free-running local oscillator is equivalent to knowing the time of the plurality of receptions of Isochronous Timestamp Packets in the time domain of the free-running oscillator. It will also be understood that such a relative notion of time can be referenced to an absolute notion of time.

In one embodiment a SuperSpeed synchronisation channel is provided, adapted to determine the respective period of time between reception of successive Isochronous Timestamp Packets. However, this channel may be replaced with a non-SuperSpeed synchronisation channel. The non-SuperSpeed synchronisation channel may be adapted to any one of the methods of synchronisation as disclosed in this invention. The non-SuperSpeed synchronisation channel may include a periodic timing signal adapted for use as the reference timing signal instead of the Isochronous Timestamp Packet in the SuperSpeed synchronisation channel.

Furthermore, it is often desirable to know the absolute phase relationship between the plurality of timebases, but one device may be close to the Host Controller and another may be a long distance away. Since each of a plurality of instruments (such as SuperSpeed USB devices) synchronised according to this method would be synchronised to the reception of the plurality of Isochronous Timestamp Packets, absolute phase information is not automatically available.

Therefore if the instrument (such as a SuperSpeed USB device) is one of a plurality of like devices, the method may also include an apparatus for determining the relative propagation time of the multicast Isochronous Timestamp Packets from the USB Host Controller to each of the devices, such as by any of the methods for determining propagation time of the present invention described herein. Furthermore each of the devices may contain a mechanism adapted to adjust the phase of their respective local notions of time, resulting in a synchronised USB with known absolute phase relationships between devices.

It will be understood by those skilled in the art that such a measurement synchronisation method as described for a USB instrument is also applicable to any measurement instrument that receives a plurality of timestamped signals with which to determine the rate of its local clock and hence the timebase of the local measurement system, including to permit synchronisation of a plurality of disparate networks (for example but not limited to PXI, PXI-express, IEEE-1588 ethernet, PCI, VXI and USB).

According to this aspect, there is also provided an apparatus for synchronising the operation of a measurement instrument having a local oscillator and function circuitry to an external timebase, the apparatus comprising:
circuitry for decoding a plurality of time-stamped packets from the communication bus;
circuitry for measuring a time interval between receptions of the time-stamped packets in a time domain of the local oscillator; and
a computing mechanism configured to create a mapping between respective local times of a plurality of operations or events of the function circuitry and a time domain of a communication bus to which the instrument is attached.

The apparatus may comprise the instrument.

In one embodiment, the measurement instrument is a SuperSpeed USB device and the communication bus is a SuperSpeed USB.

In one embodiment, the instrument is an Ethernet-based device.

In an embodiment, the local oscillator is a free-running oscillator.

In a particular embodiment, the local oscillator is a voltage controller oscillator (VCXO), a temperature compensated crystal oscillator (TCXO), an oven controlled crystal oscillator (OCXO) or some other clock circuitry.

In a second broad aspect, the invention provides a method of synchronising the operation of a plurality of instruments each having a microcontroller and a local oscillator attached to a common USB Host Controller, the method comprising:
for each respective instrument:
   (a) the instrument opening one or more Isochronous communication pipes or endpoints to the USB Host Controller;
   (b) ensuring that the instrument is in link state U0 in preparation for receiving a plurality of Isochronous Timestamp Packets (ITP);
   (c) the USB Host Controller sending a plurality of Isochronous Timestamp Packets to the Isochronous communication pipes or endpoints;
   (d) the instrument receiving the plurality of Isochronous Timestamp Packets and in response generating a respective plurality of interrupts and passing the interrupts to the microcontroller;
   (e) a timer measuring a time interval between receptions of the Isochronous Timestamp Packets in a time domain of the local oscillator; and
   (f) the instrument creating a mapping between respective local times of a plurality of operations or events of the function circuitry of the instrument and a time domain of the USB Host Controller.

The instruments may be SuperSpeed USB devices.

In a third broad aspect, the invention provides a system for reducing triggering latency and acquiring data across a plurality of different instrumentation interfaces, comprising:
a USB host controller; and
a plurality of USB devices in data communication with the USB host controller, each of the USB devices having a synchronous clock, a synchronized real time clock register and a memory;
wherein the USB devices are controllable to synchronously commence acquiring data, to store to their respective memory the data once acquired and to store to their respective memory time stamp information indicative of the time of acquisition of at least some of the acquired data; a first of the USB devices is configured to respond to a data collection command to collect data by sending to the USB host controller a first message that includes data indicative of a time of receipt of the data collection command, the USB host controller is configured to respond to the first message by sending the other USB devices a second message including the data indicative of the time of receipt by the first USB device of the data collection command, and the other USB devices are configured to respond to the second message by reading their respective memories and sending acquired data stored therein to the USB host controller commencing from a location in each respective memory corresponding to the time of receipt or a next available location.

In a fourth broad aspect, the invention provides a USB system, comprising:
a plurality of USB networks, each comprising a USB host controller and a plurality of synchronised USB devices, the plurality of USB networks being synchronised such that the plurality of USB devices across the plurality of USB networks are mutually synchronised;
wherein the USB devices are configured (i) to execute a plurality of instructions upon receipt of an external trigger signal, the instructions comprising that the respective USB device make a measurement of one or more parameters of the respective USB device, (ii) to time stamp the respective measurement, and (iii) record the measurement in a respective local memory; and
wherein a first of the USB devices is configured to notify its respective USB host controller upon receipt of the external trigger signal, the respective USB host controller is configured to respond to being notified of the receipt by notifying each of the other USB devices connected to the respective USB host controller and the one or more other of the USB host controllers of the receipt of the external trigger signal and its associated timestamp by the first USB device, the other of the USB host controllers are configured to notify their respective USB devices of the occurrence of the external trigger signal and its associated timestamp, the plurality of USB devices on the other of the USB networks are configured to transmit a content, if any, of their respective local memories to their respective USB host controller in response to receiving the notification of the receipt, and the plurality of USB devices on the other of the USB networks are configured to execute their respective plurality of instructions in response to receiving notification of the receipt.

In one embodiment, the USB devices are configured to continue executing their prescribed instructions while transmitting the contents of their respective local memories to their respective Host Controllers, to continue to buffer data to their respective local memories and to begin steaming data directly to their respective Host Controllers once the contents of their respective memories have been completely transferred to their respective Host Controllers.

In a fifth broad aspect, the invention provides a trigger engine or device, comprising:
a local clock synchronisable to the respective local clocks of a plurality of USB devices attached to a common USB host controller;
wherein the trigger device is configured to time stamp an external trigger signal upon receipt thereof, and to notify the USB host controller of the receipt and of the associated time stamp.

In one embodiment, the trigger device is configured to execute a set of instructions and buffer time stamped results thereof in a local memory, and to transmit the buffered and time stamped results to the USB host controller after receipt of the external trigger signal.

The device may be adapted to continue executing the set of instructions while transferring the results from the memory to the USB host controller, including buffering data to the memory, and to begin transferring the data to the USB host controller after the results have been transferred to from the memory to the USB host controller.

According to this aspect, the invention also provides a USB device, comprising:
a local clock; and
a local memory;
wherein the local clock is synchronisable to respective local clocks of one or more other USB devices, and the USB device is configured to receive a set of instructions from a USB host controller, to initiate the instructions and buffer results in the local memory, and to respond to receiving notification of the time that an external trigger signal was received by a trigger device by transmitting the buffered results to the USB host controller.

In one embodiment, the USB device is adapted to continue executing the instructions while transmitting the results to the USB host controller, and to buffer data to the memory and to initiate transferring the data to the USB host controller after the results have been transferred to from the memory to the USB host controller.

In a sixth broad aspect, the invention provides a method of reducing the triggering latency of a plurality of devices or instruments attached to a plurality of different instrumentation interfaces, the instrumentation interfaces being in data communication with each other and connected by one or more synchronisation channels, the method comprising:
synchronising the instrumentation interfaces via the synchronisation channels;
synchronising the devices or instruments to their respective instrumentation interfaces;
configuring the devices or instruments so as to respond to a trigger notification from one or more of the other trigger devices or instruments by executing a plurality of instructions, the instructions being adapted to instruct the devices or instruments to one or more measurements of one or more parameters of the respective devices or instruments;
arming the devices or instruments such that the devices or instruments commence performing their prescribed functions synchronously, receive and store to their respective memory data acquired as a result of performing the prescribed functions and store to their respective memory time stamp information indicative of the time of acquisition of the acquired data;
one of the trigger devices or instruments responding to receipt of a trigger event by transmitting or initiating transmission of a trigger notification to the other devices or instruments across the instrumentation interfaces;
the devices or instruments on the instrumentation interfaces transmitting the content of their respective local memories to their respective communication controllers in response to receiving the trigger notification; and
the devices or instruments executing their respective plurality of instructions in response to receiving the trigger notification.

The instrumentation interfaces may comprise, for example, one or more of PXI, PXI-express, IEEE-1588 ethernet, PCI, VXI or USB.

This aspect also provides an apparatus for transferring trigger signals from a first USB device to a plurality of second USB Devices attached to a USB network with minimal latency, the apparatus comprising:
USB hub circuitry adapted to communicate upstream toward a Host Controller and to communicate downstream toward a plurality of USB devices; and
trigger engine circuitry adapted to observe communication traffic upstream of the USB hub circuitry and to transmit communication packets downstream to an upstream port of the USB hub circuitry;
wherein the trigger engine is configured to decode upstream directed communication from a USB network connected downstream of the apparatus, to search for specific trigger request signals transmitted upstream from the USB network, and to transmit trigger command packets downstream toward the USB hub circuitry upon reception of the trigger request signals.

In one embodiment, the trigger engine circuitry is located inline between the upstream port and the USB Hub circuitry, and is configured to transmit the communication traffic upstream of the USB hub circuitry and to transmit the communication packets passing downstream to the upstream port of the USB hub circuitry. In one embodiment, the apparatus is configured so that communication from upstream of the apparatus to the USB Hub circuitry passes through the trigger engine.

The apparatus may further comprise multiplexer circuitry adapted to selectively route either an upstream signal path or output of the trigger engine to the upstream port of the USB hub circuitry.

According to this aspect there is still further provided an apparatus for transferring trigger signals from a first USB device to a plurality of second USB Devices attached to a USB network with minimal latency, the apparatus comprising:
circuitry adapted for communicating upstream toward a USB Host Controller and communicating downstream toward a plurality of USB devices; and
trigger engine circuitry adapted to observe all communication traffic through the apparatus;
wherein the apparatus is adapted to decode upstream directed communication from the plurality of USB devices, to search for specific trigger request signals transmitted upstream from the USB network, and to transmit trigger command packets downstream toward the plurality of USB devices upon reception of the trigger request signals.

In one embodiment, the trigger engine circuitry is located inline upstream of the circuitry, and is configured to transmit the communication traffic upstream of the circuitry. In one embodiment, the apparatus further comprises multiplexer circuitry adapted to selectively disable an upstream signal connection.

According to this aspect there is still further provided a method of transferring trigger signals from a first USB device to one or more second USB devices attached to a USB network with minimal latency, the method comprising:
arming the first USB device to receive a Trigger Condition;
the first USB device detecting the Trigger Condition;
the first USB Device responding by transmitting a Trigger Request message upstream to a USB Host Controller of the USB network;
detecting passage of the Trigger Request with a Trigger Engine located in the USB network; and
the Trigger Engine responding to detection of the Trigger Request by transmitting a Trigger Command message downstream to the second USB devices.

In one embodiment, the method further comprises:
opening a communication pipe between a USB Host Controller and the plurality of USB devices; and
inserting the Trigger Command into a data packet passing downstream in the communication pipe.

In one embodiment, the method further comprises:
selectively disconnecting the plurality of USB devices upstream of the Trigger Engine; and
transmitting the Trigger Command downstream of the Trigger Engine.

The Trigger Condition may be reception of a signal from an external source.

The USB devices may be non-SuperSpeed Devices. The Trigger Engine may broadcast the Trigger Command to all attached downstream USB devices.

The USB devices may be SuperSpeed USB Devices. The Trigger Engine may selectively transmit the Trigger Command to the second USB devices, each of the second USB devices being addressed using a USB Routing String.

In a certain embodiment, the method includes detecting passage of the Trigger Request passing through the Trigger Engine.

According to this aspect there is also provided a method of triggering a plurality of first USB devices to perform their respective predefined operations with a trigger signal applied at at least one second USB device with minimal latency, the first and second USB devices attached to a common USB network, the method comprising:
arming the second USB device to receive a Trigger Condition;
the second USB Device detecting the Trigger Condition;
the second USB Device responding by transmitting a Trigger Request message upstream to a USB Host Controller of the USB network;
detecting passage of the Trigger Request with a Trigger Engine; and
the Trigger Engine responding to detecting the passage of the Trigger Request by transmitting a Trigger Command message downstream to the plurality of first USB devices.

Thus, the plurality of second USB devices execute their respective predefined operations with minimal trigger propagation latency.

In one embodiment, the method further comprises:
opening a communication pipe between a USB Host Controller and the plurality of USB devices; and
inserting the Trigger Command into a data packet passing downstream in the communication pipe.

In an embodiment, the method further comprises:
selectively disconnecting the plurality of USB devices upstream of the Trigger Engine; and
transmitting the Trigger Command downstream of the Trigger Engine.

The Trigger Condition may be reception of a signal from an external source.

The USB devices may be non-SuperSpeed Devices. The Trigger Engine may broadcast the Trigger Command to all attached downstream USB devices.

The USB devices may be SuperSpeed USB Devices. TheTrigger Engine may selectively transmit the Trigger Command to the second USB devices, the second USB devices being addressed using a USB Routing String.

In one embodiment, the method includes detecting passage of the Trigger Request passing through the Trigger Engine.

In a seventh broad aspect, the invention provides a method of triggering a plurality of USB devices to perform their respective predefined operations upon reception of a plurality of trigger signals, the USB devices attached to a common USB network, comprising:
arming the USB devices to receive respective trigger conditions;
configuring a trigger engine attached to the USB network with a specific combinatorial trigger state, the combinatorial trigger state being a combination of trigger states of the USB devices,
the USB devices detecting the respective trigger conditions;
the USB devices transmitting respective trigger request messages upstream to a USB Host Controller of the USB network, the trigger request messages being indicative of respective trigger states of the USB devices;
detecting passage of the trigger requests with the trigger engine;
the trigger engine maintaining a record of a trigger status of each of the USB devices;
the trigger engine comparing the record of trigger status with the combinatorial trigger state;
the trigger engine transmitting a trigger command message downstream to the USB devices upon the trigger status matching the combinatorial trigger state.

Thus, the plurality of USB devices execute their respective predefined operations with minimal trigger propagation latency.

In one embodiment, the combinatorial trigger state includes time dependence, such that temporal relationships between transitions of the respective plurality of trigger states is important.

The method may further comprise:
opening a communication pipe between a USB Host Controller and the plurality of USB devices; and
inserting the trigger command into a data packet passing downstream in the communication pipe.

In one embodiment, the method further comprises:
selectively disconnecting the USB devices upstream of the trigger engine; and
transmitting the trigger command downstream of the trigger engine.

The Trigger Condition may be reception of a signal from an external source.

The USB devices are non-SuperSpeed Devices. The trigger engine may broadcasts the trigger command to the USB devices.

The USB devices may be SuperSpeed USB Devices. The trigger engine may selectively transmit the trigger command to the USB devices, each of the USB devices being addressed using a USB Routing String.

In one embodiment, the method includes detecting passage of the trigger request passing through the trigger engine.

According to this aspect, there is also provided an apparatus for triggering a plurality of USB devices attached to a common USB network to perform respective predefined operations upon reception of respective trigger signals, the apparatus comprising:
circuitry adapted for communicating upstream toward a USB Host Controller and communicating downstream toward the USB devices;
trigger engine circuitry adapted to observe communication traffic through the apparatus;
circuitry adapted to compare a plurality of trigger request signals with a predefined Combinatorial Trigger State; and
circuitry adapted to transmit communication packets downstream;
wherein the apparatus is adapted to decode upstream directed communication from the USB devices, to search for specific trigger request signals transmitted upstream from the USB network, and to transmit trigger command packets downstream toward the USB devices upon reception of the plurality of trigger request signals in correct combinatorial relationship.

The combinatorial trigger state may includes time dependence.

The apparatus may be further adapted to:
open a communication pipe between a USB Host Controller and the USB devices; and
insert the trigger command into a data packet passing downstream in the communication pipe.

The apparatus may be further adapted to:
selective disconnecting the USB devices upstream of a trigger device; and
transmit the trigger command downstream of the trigger engine.

The Trigger Condition may be reception of a signal from an external source.

The USB devices are non-SuperSpeed Devices. The trigger command may be broadcast by a trigger engine to the USB devices.

The USB devices may be SuperSpeed USB Devices. The trigger command may be selectively transmitted by a trigger engine to the USB devices, each of the USB devices being addressed using a USB Routing String.

The apparatus may be configured to detect passage of the trigger request passing through the trigger engine.

It should be noted that all the various features of each of the above aspects of the invention can be combined as suitable and desired.

Furthermore, it should be noted that the invention also provides apparatuses and systems arranged to perform each of the methods of the invention described above.

In addition, apparatuses according to the invention can be embodied in various ways. For example, such devices could be constructed in the form of multiple components on a printed circuit or printed wiring board, on a ceramic substrate or at the semiconductor level, that is, as a single silicon (or other semiconductor material) chip.

### BRIEF DESCRIPTION OF THE DRAWINGS

In order that the present invention may be more clearly ascertained, embodiments will now be described, by way of example, with reference to the accompanying drawing, in which:
Figure 1 is a schematic diagram of the dual-bus architecture of USB3 according to the background art;
Figure 2A is a schematic representation of an apparatus for reducing the triggering latency of USB devices according to an embodiment of the present invention;
Figure 2B is a schematic representation of an apparatus for reducing the triggering latency of USB devices according to another embodiment of the present invention; and
Figure 3 is a schematic representation of a USB network according to another embodiment of the present invention.

### DETAILED DESCRIPTION OF THE INVENTION

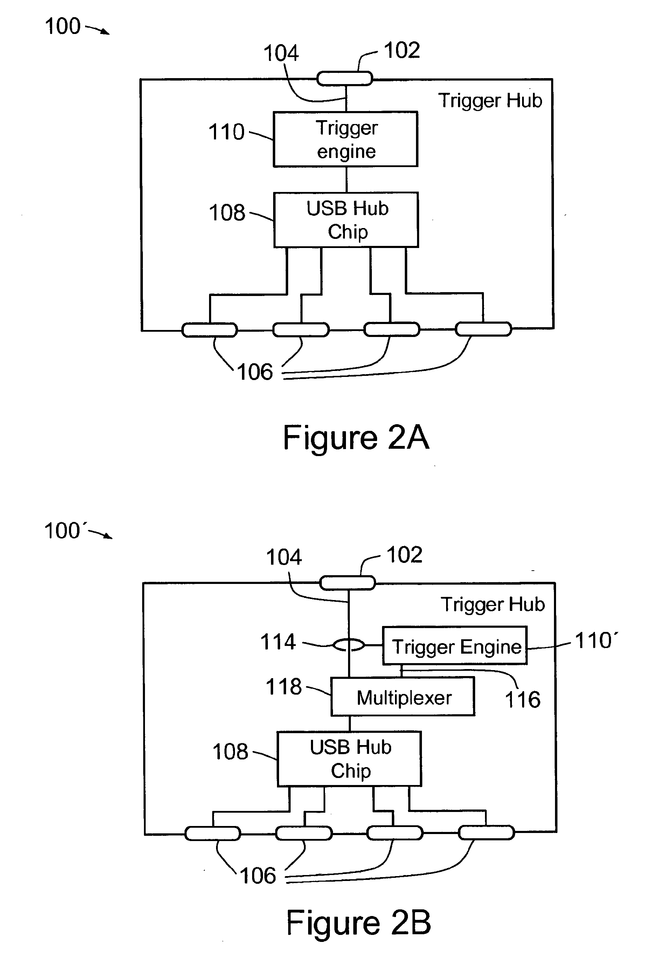

Figure 2A is a schematic representation of an apparatus in the form of a Trigger Hub 100 according to an embodiment of the present invention, for reducing the triggering latency of USB devices. Trigger Hub 100 has an upstream port 102, a plurality of downstream ports 106, a USB Hub chip 108 and a Trigger Controller or Engine 110 (connected to upstream port 102 by upstream line 104).

Trigger Engine 110 is thus located between upstream port 102 and USB Hub chip 108 such that all upstream communication passes through it. In this way Trigger Engine 110 is able to observe all communication traffic.

However, Trigger Engine 110 need not be located 'inline' between upstream port 102 and USB Hub chip 108: according to a variant of the embodiment of figure 2A, Trigger Engine 110 may be adapted to observe traffic without being inline. Figure 2B is a schematic representation of a Trigger Hub 100' according to this variant in which, as compared with Trigger Hub 100 of figure 2A, like reference numerals have been used to identify like features. Trigger Hub 100' thus includes an upstream port 102, a plurality of downstream ports 106 and a USB Hub chip 108, situated as in Trigger Hub 100 of figure 2A. Trigger Engine 110' of Trigger Hub 100', however, is arranged merely to observe traffic at monitoring point 114 on upstream line 104, and has a separate downstream connection 116 to USB Hub chip 108. Trigger Hub 100' optionally includes a multiplexer 118 to selectively connect either upstream line 104 or Trigger Engine 110' to USB Hub chip 108.

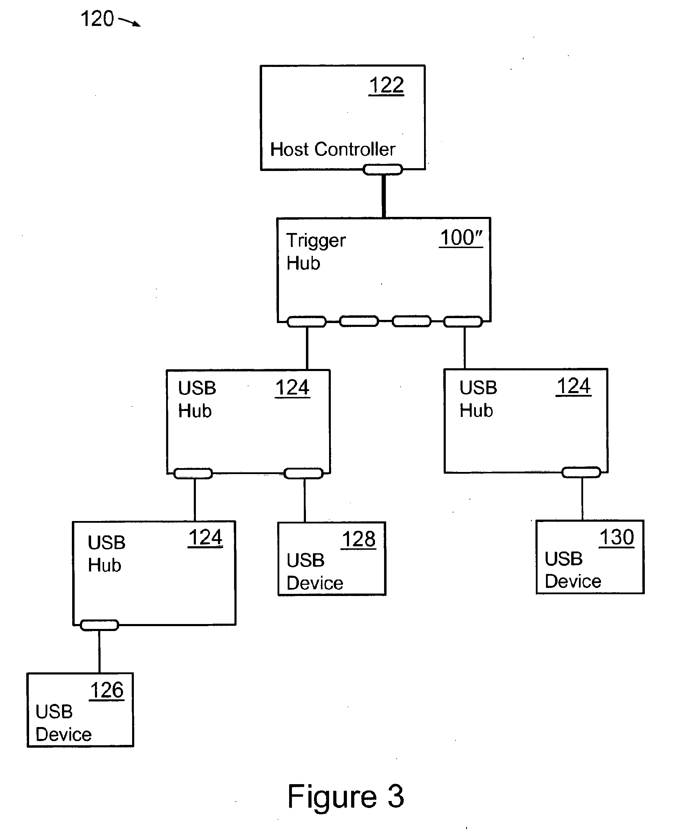

Figure 3 is a schematic representation of a USB network 120 according to another embodiment of the present invention. USB network 120, though in some respects a typical and conventional USB network, includes a Trigger Hub 100" (comprising either Trigger Hub 100 of figure 2A or Trigger Hub 100' of figure 2B) to reduce the latency in triggering signals passing from one USB device to another. USB network 120 also contains a USB Host Controller 122, a plurality of USB Hubs 124 and a plurality of USB Devices 126, 128, 130.

In one scenario illustrating the operation of USB network 120 (and hence of Trigger Hub 100 or Trigger Hub 100'), USB device 126 wishes to send a low latency trigger to USB devices 128 and 130 (so is henceforth referred to as the 'trigger device' 126'). When arming USB devices 128 and 130 to receiver a trigger signal, Host Controller 122 opens a communication pipe downstream to each of devices 128 and 130. This will be referred to as the 'Trigger Pipe' and may be an isochronous pipe in which a fixed bandwidth is made available during each USB frame or it may be another form of data pipe.

Trigger device 126 is armed and waiting to receive a trigger (typically from an external device). Once the trigger has been received, trigger device responds by sending a message (or trigger request) is transmitted upstream, passing through Trigger Hub 100" on its way to Host Controller 122. Trigger Engine 110 decodes the upstream message and observes that trigger device 126 has issued a trigger request.

Trigger Engine 110 then broadcasts a message, in the form of a Trigger Command, on all downstream ports 106 of Trigger Hub 100". In the case of non-SuperSpeed USB, the message passes down the entire network and is received by all attached devices. In the case of SuperSpeed USB, Trigger Engine 110 would need to transmit each message individually to a specific network address, defined by the USB Routing String.

Each armed USB device 128, 130 receives the downstream trigger command message and executes its own predefined commands. This approach obviates the need for triggers to pass through the operating system, the slowest part of the chain.

Trigger Hub 100" does not have the right to instigate packet transfers according to the USB Specification' only Host Controller 122 has that right. This is why the Trigger Pipe was opened by Host Controller 122 at the beginning of the trigger arming process. In the case of an Isochronous pipe, a small bandwidth channel is opened between Trigger Host 100" and each attached USB device126, 128, 130. In the case of non-SuperSpeed devices, only one pipe is required since all packets are broadcast downstream. Once Trigger Hub 100" receives the trigger command from trigger device 126, Trigger Hub 100" waits for the next scheduled downstream transmission time in the Trigger Pipe and inserts a trigger command into the downstream packet. This Trigger Command is then received by USB devices 128 and 130, which respond by executing their commands.

In another embodiment, Trigger Engine 110 injects phantom packets downstream. Trigger Engine110 either waits until it comes across a gap in the downstream packet that it can use to inject the phantom packet, or momentarily disconnects reception of signals from upstream port 102, allowing Trigger Engine 110 to transmit the downstream Trigger Command.

Furthermore, these techniques are applicable when combinatorial trigger logic must be applied to a plurality of Trigger Requests. If one considers the case where both USB Devices 126 and 128 are designated Trigger Devices, USB Device 130 may be triggered to perform a function when both USB device 126 and USB device 128 meet certain parameters.

According to this embodiment, therefore, Trigger Engine 110 contains combinatorial logic. Trigger Engine 110 is programmed by Host Controller 122 with the required combination of triggers. Once Trigger Hub 100" receives valid trigger requests from both USB devices 126 and 128 it issues a Trigger Command to USB Device 130.

Furthermore, this combinatorial logic may include time windowing or other advanced multi-device triggering constraints: essentially any level of complexity of combinatorial logic may be accommodated according to this embodiment. Once all combinations of trigger requests have been received and are valid, a trigger command may be issued by Trigger Engine 110.

Thus, these embodiments address the limitation imposed on the speed at which triggers can be transferred from one USB device to the next arising from the Host-centric nature of conventional USB architecture, whereby all communication is initiated by a Host with no direct inter-device communication (a limitation exacerbated by the fact that communication must pass through the operating system, which can have the effect of delaying trigger propagation by milliseconds, or even seconds in cases with a heavily loaded processor).

In the preceding description of the invention and in the claims that follow, except where the context requires otherwise owing to express language or necessary implication, the expression "Host Controller" embraces all forms of USB Host Controller, including standard USB Host controllers, USB-on-the-go Host Controllers and wireless USB Host Controllers.

## Claims

1. An apparatus (100) for transferring trigger signals from a first USB device (126) to a plurality of second USB Devices (128, 130) attached to a USB network (120) with minimal latency, the apparatus (100) comprising:
circuitry (108) adapted for communicating upstream toward a USB Host Controller and communicating downstream toward a plurality of USB devices;
**characterised in that** said apparatus further comprises:
trigger engine circuitry (110) adapted to observe communication traffic through said apparatus;
wherein said apparatus is adapted to decode upstream directed communication from said plurality of USB devices, to search for specific trigger request signals transmitted upstream from said USB network, and to transmit trigger command packets downstream toward said plurality of USB devices upon reception of said trigger request signals.

2. An apparatus (100) as claimed in claim 1, wherein said trigger engine circuitry is located inline upstream of said circuitry, and is configured to transmit said communication traffic upstream of said circuitry.

3. An apparatus (100) as claimed in claim 1, further comprising multiplexer circuitry (118) adapted to selectively disable an upstream signal connection.

4. An apparatus (100) as claimed in any one of claims 1 to 3, wherein
the circuitry (108) comprises USB hub circuitry; and
the trigger engine circuitry (110) is adapted to observe communication traffic upstream of said USB hub circuitry and to transmit communication packets downstream to an upstream port of said USB hub circuitry;
wherein said trigger engine (110) is configured to decode upstream directed communication from a USB network connected downstream of said apparatus, to search for specific trigger request signals transmitted upstream from said USB network, and to transmit trigger command packets downstream toward said USB hub circuitry (108) upon reception of said trigger request signals.

5. An apparatus (100) as claimed in claim 4, configured so that communication from upstream of said apparatus to said USB Hub circuitry (108) passes through said trigger engine (110).

6. An apparatus (100) as claimed in claim 5, further comprising multiplexer circuitry (118) adapted to selectively route either an upstream signal path or output of said trigger engine to said upstream port of said USB hub circuitry (108).

7. An apparatus (100) as claimed in any one of claims 1 to 6, further comprising:
circuitry (110) adapted to compare a plurality of trigger request signals with a predefined Combinatorial Trigger State;
wherein said apparatus is adapted to decode upstream directed communication from said USB devices, to search for specific trigger request signals transmitted upstream from said USB devices, and to transmit trigger command packets downstream toward said USB devices upon reception of said plurality of trigger request signals in correct combinatorial relationship.

8. An apparatus (100) as claimed in claim 7, wherein said combinatorial trigger state includes time dependence.

9. An apparatus (100) as claimed in either claim 7 or 8, further adapted to:
open a communication pipe between a USB Host Controller (122) and said USB devices (128, 130); and
insert said trigger command into a data packet passing downstream in said communication pipe.

10. An apparatus (100) as claimed in any one of claims 7 to 9, further adapted to:
selectively disconnect said USB devices upstream of a trigger device (126); and
transmit said trigger command downstream of said trigger engine (110).

11. An apparatus (100) as claimed in any one of claims 4 to 6, wherein said USB devices (128, 130) include non-SuperSpeed Devices and said trigger command is broadcast by the trigger engine (110) to said non-SuperSpeed USB devices.

12. An apparatus (100) as claimed in any one of claims 4 to 6, wherein said USB devices (128, 130) include SuperSpeed USB Devices and said trigger command is selectively transmitted by a trigger engine (110) to said SuperSpeed USB devices, each of said SuperSpeed USB devices being addressed using a USB Routing String.

13. A method of transferring trigger signals from a first USB device (126) to one or more second USB devices (128, 130) attached to a USB network (120) with minimal latency, the method comprising:
arming said first USB device (126) to receive a Trigger Condition;
said first USB device (126) detecting said Trigger Condition;
said first USB Device (126) responding by transmitting a Trigger Request message upstream to a USB Host Controller (122) of said USB network (120);
**characterised by**:
detecting passage of said Trigger Request with a Trigger Engine (110) located in said USB network; and
said Trigger Engine (110) responding to detection of said Trigger Request by transmitting a Trigger Command message downstream to said second USB devices (128, 130).

14. A method as claimed in claim 13, further comprising:
opening a communication pipe between a USB Host Controller (122) and said plurality of USB devices (128, 130); and
inserting said Trigger Command into a data packet passing downstream in said communication pipe.

15. A method as claimed in claim 13, further comprising:
selectively disconnecting said plurality of USB devices upstream of said Trigger Engine (110); and
transmitting said Trigger Command downstream of said Trigger Engine (110).

16. A method as claimed in any one of claims 13 to 15, wherein said second USB devices (128, 130) include non-SuperSpeed Devices and said Trigger Command message is broadcast by the Trigger Engine (110) to said non-SuperSpeed Devices.

17. A method as claimed in any one of claims 13 to 15, wherein said second USB devices (128, 130) include SuperSpeed USB Devices, wherein said Trigger Engine (110) selectively transmits said Trigger Command to said SuperSpeed USB devices, each of said SuperSpeed USB devices being addressed using a USB Routing String.

18. A method as claimed in any one of claims 13 to 17, further comprising:
arming a plurality of said USB devices (126, 128, 130) to receive respective trigger conditions;
configuring the trigger engine with a specific combinatorial trigger state, said combinatorial trigger state being a combination of trigger states of said USB devices (126, 128, 130),
said USB devices detecting said respective trigger conditions;
said USB devices (126, 128, 130) transmitting respective trigger request messages upstream to the USB Host Controller (122) of said USB network (120), said trigger request messages being indicative of respective trigger states of said USB devices;
detecting passage of said trigger requests with said trigger engine (110);
said trigger engine (110) maintaining a record of a trigger status of each of said USB devices (126, 128, 130);
said trigger engine (110) comparing said record of trigger status with said combinatorial trigger state;
said trigger engine (110) transmitting a trigger command message downstream to said USB devices (126, 128, 130) upon said trigger status matching said combinatorial trigger state.

19. A method as claimed in claim 18, wherein said combinatorial trigger state includes time dependence, such that temporal relationships between transitions of said respective plurality of trigger states is important.

## Patentansprüche

1. Vorrichtung (100) zum Transferieren von Auslösersignalen von einer ersten USB-Einrichtung (126) zu mehreren zweiten USB-Einrichtungen (128, 130), die an ein USB-Netzwerk (120) mit minimaler Latenz angeschlossen sind, wobei die Vorrichtung (100) Folgendes umfasst:
eine Schaltungsanordnung (108), ausgelegt zum Kommunizieren stromaufwärts zu einem USB Host Controller und Kommunizieren stromabwärts zu mehreren USB-Einrichtungen;
**dadurch gekennzeichnet, dass** die Vorrichtung weiterhin Folgendes umfasst: eine Auslöser-Engine-Schaltungsanordnung (110), die ausgelegt ist zum Beobachten von Kommunikationsverkehr durch die Vorrichtung;
wobei die Vorrichtung ausgelegt ist zum Decodieren von stromaufwärts gerichteter Kommunikation von den mehreren USB-Einrichtungen, zum Suchen nach spezifischen Auslöseranforderungssignalen, die stromaufwärts von dem USB-Netzwerk übertragen werden, und zum Übertragen von Auslöserbefehlspaketen stromabwärts zu den mehreren USB-Einrichtungen bei Empfang der Auslöseranforderungssignale.

2. Vorrichtung (100) nach Anspruch 1 wobei die Auslöser-Engine-Schaltungsanordnung in einer Linie vor der Schaltungsanordnung angeordnet ist und konfiguriert ist zum Übertragen des Kommunikationsverkehrs stromaufwärts von der Schaltungsanordnung.

3. Vorrichtung (100) nach Anspruch 1, weiterhin umfassend eine Multiplexerschaltungsanordnung (118), die ausgelegt ist zum selektiven Deaktivieren einer stromaufwärtigen Signalverbindung.

4. Vorrichtung (100) nach einem der Ansprüche 1 bis 3, wobei
die Schaltungsanordnung (108) eine USB-HubSchaltungsanordnung umfasst und
die Auslöser-Engine-Schaltungsanordnung (110) ausgelegt ist zum Beobachten von Kommunikationsverkehr stromaufwärts von der USB-Hub-Schaltungsanordnung und zum Übertragen von Kommunikationspaketen stromabwärts zu einem stromaufwärtigen Port der USB HubSchaltungsanordnung;
wobei die Auslöser-Engine (110) konfiguriert ist zum Decodieren von stromaufwärts gerichteter Kommunikation von einem stromabwärts von der Vorrichtung geschalteten USB-Netzwerk, zum Suchen nach spezifischen, stromaufwärts von dem USB-Netzwerk übertragenen Auslöseranforderungssignalen und zum Übertragen von Auslöserbefehlspaketen stromabwärts zu der USB HubSchaltungsanordnung (108) bei Empfang der Auslöseranforderungssignale.

5. Vorrichtung (100) nach Anspruch 4, die so konfiguriert ist, dass eine Kommunikation von stromaufwärts von der Vorrichtung zu der USB HubSchaltungsanordnung (108) durch die Auslöser-Engine (110) verläuft.

6. Vorrichtung (100) nach Anspruch 5, weiterhin umfassend eine Multiplexerschaltungsanordnung (118), die ausgelegt ist zum selektiven Lenken eines stromaufwärtigen Signalpfads oder einer stromaufwärtigen Signalausgabe der Auslöser-Engine zu dem stromaufwärtigen Port der USB HubSchaltungsanordnung (108).

7. Vorrichtung (100) nach einem der Ansprüche 1 bis 6, die weiterhin Folgendes umfasst:
eine Schaltungsanordnung (110), die ausgelegt ist zum Vergleichen mehrerer Auslöseranforderungssignale mit einem vordefinierten kombinatorischen Auslöserzustand;
wobei die Vorrichtung ausgelegt ist zum Decodieren einer stromaufwärts gerichteten Kommunikation von den USB-Einrichtungen zum Suchen nach spezifischen, stromaufwärts von den USB-Einrichtungen übertragenen Auslöseranforderungssignalen und zum Übertragen von Auslöserbefehlspaketen stromabwärts zu den USB-Einrichtungen bei Empfang der mehreren Auslöseranforderungssignale in einer korrekten kombinatorischen Beziehung.

8. Vorrichtung (100) nach Anspruch 7, wobei der kombinatorische Auslöserzustand eine Zeitabhängigkeit beinhaltet.

9. Vorrichtung (100) nach Anspruch 7 oder 8, die weiterhin ausgelegt ist zum:
Öffnen einer Kommunikations-Pipe zwischen einem USB Host Controller (122) und den USB-Einrichtungen (128, 130) und
Einfügen des Auslöserbefehls in ein Datenpaket, das stromabwärts in der Kommunikations-Pipe verläuft.

10. Vorrichtung (100) nach einem der Ansprüche 7 bis 9, weiterhin ausgelegt zum:
selektiven Trennen der USB-Einrichtungen stromaufwärts von einer Auslösereinrichtung (126) und
Übertragen des Auslöserbefehls stromabwärts von der Auslöser-Engine (110).

11. Vorrichtung (100) nach einem der Ansprüche 4 bis 6, wobei die USB-Einrichtungen (128, 130) NichtSuperSpeed-Einrichtungen beinhalten und der Auslöserbefehl von der Auslöser-Engine (110) zu den Nicht-SuperSpeed-USB-Einrichtungen rundgesendet wird.

12. Vorrichtung (100) nach einem der Ansprüche 4 bis 6, wobei die USB-Einrichtungen (128, 130) SuperSpeedUSB-Einrichtungen beinhalten und der Auslöserbefehl selektiv von einer Auslöser-Engine (110) an die SuperSpeed-USB-Einrichtungen übertragen wird, wobei jede der SuperSpeed-USB-Einrichtungen unter Verwendung eines USB Routing String adressiert wird.

13. Verfahren zum Transferieren von Auslösersignalen von einer ersten USB-Einrichtung (126) zu einer oder mehreren zweiten USB-Einrichtungen (128, 130), die an ein USB-Netzwerk (120) mit minimaler Latenz angeschlossen sind, wobei das Verfahren Folgendes umfasst:
Scharfstellen der ersten USB-Einrichtung (126) zum Empfangen einer Auslöserbedingung;
die erste USB-Einrichtung (126) detektiert die Auslöserbedingung;
die erste USB-Einrichtung (126) antwortet durch Übertragen einer Auslöseranforderungsnachricht stromaufwärts zu einem USB Host Controller (122) des USB-Netzwerks (120);
**gekennzeichnet durch**:
Detektieren einer Passage der Auslöseranforderung mit einer Auslöser-Engine (110), die sich in dem USB-Netzwerk befindet; und
die Auslöser-Engine (110) antwortet auf die Detektion der Auslöseranforderung **durch** Übertragen einer Auslöserbefehlsnachricht stromabwärts zu den zweiten USB-Einrichtungen (128, 130).

14. Verfahren nach Anspruch 13, das weiterhin Folgendes umfasst:
Öffnen einer Kommunikations-Pipe zwischen einem USB Host Controller (122) und den mehreren USB-Einrichtungen (128, 130) und
Einfügen des Auslöserbefehls in ein Datenpaket, das stromabwärts in der Kommunikations-Pipe verläuft.

15. Verfahren nach Anspruch 13, das weiterhin Folgendes umfasst:
selektiven Trennen der mehreren USB-Einrichtungen stromaufwärts von der Auslöser-Engine (110) und
Übertragen des Auslöserbefehls stromabwärts von der Auslöser-Engine (110).

16. Verfahren nach einem der Ansprüche 13 bis 15, wobei die zweiten USB-Einrichtungen (128, 130) NichtSuperSpeed-Einrichtungen beinhalten und der Auslöserbefehl von der Auslöser-Engine (110) zu den Nicht-SuperSpeed-USB-Einrichtungen rundgesendet wird.

17. Verfahren nach einem der Ansprüche 13 bis 15, wobei die zweiten USB-Einrichtungen (128, 130) SuperSpeed-USB-Einrichtungen beinhalten, wobei die Auslöser-Engine (110) selektiv den Auslöserbefehl an die SuperSpeed-USB-Einrichtungen überträgt, wobei jede der SuperSpeed-USB-Einrichtungen unter Verwendung eines USB Routing String adressiert wird.

18. Verfahren nach einem der Ansprüche 13 bis 17, das weiterhin Folgendes umfasst:
Scharfstellen mehrerer der USB-Einrichtungen (126, 128, 130) zum Empfangen jeweiliger Auslöserbedingungen; Konfigurieren der Auslöser-Engine mit einem spezifischen kombinatorischen Auslöserzustand, wobei der kombinatorische Auslöserzustand eine Kombination von Auslöserzuständen der USB-Einrichtungen (126, 128, 130) ist,
wobei die USB-Einrichtungen die jeweiligen Auslöserbedingungen detektieren;
wobei die USB-Einrichtungen (126, 128, 130) jeweilige Auslöseranforderungsnachrichten stromaufwärts zu dem USB Host Controller (122) des USB-Netzwerks (120) übertragen, wobei die Auslöseranforderungsnachrichten jeweilige Auslöserzustände der USB-Einrichtungen anzeigen;
Detektieren der Passage der Auslöseranforderungen mit der Auslöser-Engine (110);
wobei die Auslöser-Engine (110) eine Aufzeichnung eines Auslöserzustands jeder der USB-Einrichtungen (126, 128, 130) hält;
wobei die Auslöser-Engine (110) die Aufzeichnung des Auslöserstatus mit dem kombinatorischen Auslöserzustand vergleicht;
wobei die Auslöser-Engine (110) eine Auslöserbefehlsnachricht stromabwärts zu den USB-Einrichtungen (126, 128, 130) überträgt, wenn der Auslöserstatus dem kombinatorischen Auslöserzustand entspricht.

19. Verfahren nach Anspruch 18, wobei der kombinatorische Auslöserzustand eine Zeitabhängigkeit enthält, so dass zeitliche Beziehungen zwischen Übergängen der jeweiligen mehreren Auslöserzustände wichtig sind.

## Revendications

1. Appareil (100) pour transférer des signaux de déclencheur depuis un premier dispositif USB (126) vers une pluralité de seconds dispositifs USB (128, 130) raccordés à un réseau USB (120) avec une latence minimale, l'appareil (100) comprenant :
des circuits (108) conçus pour communiquer en amont vers un contrôleur hôte USB et communiquer en aval vers une pluralité de dispositifs USB ;
**caractérisé en ce que** ledit appareil comprend en outre :
des circuits de moteur de déclencheur (110) conçus pour observer un trafic de communication à travers ledit appareil ;
où ledit appareil est conçu pour décoder une communication dirigée vers l'amont depuis ladite pluralité de dispositifs USB, pour rechercher des signaux de demande de déclencheur spécifiques transmis vers l'amont depuis ledit réseau USB, et pour transmettre des paquets de commande de déclencheur vers l'aval vers ladite pluralité de dispositifs USB à réception desdits signaux de demande de déclencheur.

2. Appareil (100) tel que revendiqué dans la revendication 1, dans lequel lesdits circuits de moteur de déclencheur sont situés en ligne en amont desdits circuits, et sont configurés pour transmettre ledit trafic de communication en amont desdits circuits.

3. Appareil (100) tel que revendiqué dans la revendication 1, comprenant en outre des circuits de multiplexeur (118) conçus pour désactiver de manière sélective une connexion de signal en amont.

4. Appareil (100) tel que revendiqué dans l'une quelconque des revendications 1 à 3, dans lequel :
les circuits (108) comprennent des circuits de concentrateur USB ; et
les circuits de moteur de déclencheur (110) sont conçus pour observer un trafic de communication en amont desdits circuits de concentrateur USB et pour transmettre des paquets de communication en aval vers un port amont desdits circuits de concentrateur USB ;
où ledit moteur de déclencheur (110) est configuré pour décoder une communication dirigée vers l'amont depuis un réseau USB connecté en aval dudit appareil, pour rechercher des signaux de demande de déclencheur spécifiques transmis en amont depuis ledit réseau USB, et pour transmettre des paquets de commande de déclencheur en amont vers lesdits circuits de concentrateur USB (108) lors de la réception desdits signaux de demande de déclencheur.

5. Appareil (100) tel que revendiqué dans la revendication 4, configuré de manière à ce qu'une communication depuis l'amont dudit appareil vers lesdits circuits de concentrateur USB (108) traverse ledit moteur de déclencheur (110).

6. Appareil (100) tel que revendiqué dans la revendication 5, comprenant en outre des circuits de multiplexeur (118) conçus pour router de manière sélective soit un chemin de signal vers l'amont, soit une sortie dudit moteur de déclencheur vers ledit port vers l'amont desdits circuits de concentrateur USB (108).

7. Appareil (100) tel que revendiqué dans l'une quelconque des revendications 1 à 6, comprenant en outre :
des circuits (110) conçus pour comparer une pluralité de signaux de demande de déclencheur avec un état de déclencheur combinatoire prédéfini ;
où ledit appareil est conçu pour décoder une communication dirigée vers l'amont depuis lesdits dispositifs USB, pour rechercher des signaux de demande de déclencheur spécifiques transmis vers l'amont depuis lesdits dispositifs USB, et pour transmettre des paquets de commande de déclencheur vers l'aval vers lesdits dispositifs USB à réception de ladite pluralité de signaux de demande de déclencheur dans une relation combinatoire correcte.

8. Appareil (100) tel que revendiqué dans la revendication 7, dans lequel ledit état de déclencheur combinatoire inclut une dépendance au temps.

9. Appareil (100) tel que revendiqué dans l'une ou l'autre des revendications 7 ou 8, en outre conçu pour :
ouvrir un canal de communication entre un contrôleur hôte USB (122) et lesdits dispositifs USB (128, 130) ; et
insérer ladite commande de déclencheur dans un paquet de données passant en aval dans ledit canal de communication.

10. Appareil (100) tel que revendiqué dans l'une quelconque des revendications 7 à 9, en outre conçu pour :
déconnecter de manière sélective lesdits dispositifs USB en amont d'un dispositif déclencheur (126) ; et
transmettre ladite commande de déclencheur en aval dudit moteur de déclencheur (110).

11. Appareil (100) tel que revendiqué dans l'une quelconque des revendications 4 à 6, dans lequel lesdits dispositifs USB (128, 130) comprennent des dispositifs non SuperSpeed et ladite commande de déclencheur est diffusée par le moteur de déclencheur (110) auxdits dispositifs USB non SuperSpeed.

12. Appareil (100) tel que revendiqué dans l'une quelconque des revendications 4 à 6, dans lequel lesdits dispositifs USB (128, 130) comprennent des dispositifs USB SuperSpeed et ladite commande de déclencheur est transmise de manière sélective par un moteur de déclencheur (110) vers lesdits dispositifs USB SuperSpeed, chacun desdits dispositifs USB SuperSpeed étant adressé au moyen d'une chaîne de routage USB.

13. Procédé pour transférer des signaux de déclencheur depuis un premier dispositif USB (126) vers un ou plusieurs seconds dispositifs USB (128, 130) raccordés à un réseau USB (120) avec une latence minimale, le procédé comprenant les étapes suivantes :
armer ledit premier dispositif USB (126) pour recevoir une condition de déclencheur ;
ledit premier dispositif USB (126) détectant ladite condition de déclencheur ;
ledit premier dispositif USB (126) répondant en transmettant un message de demande de déclencheur vers l'amont vers un contrôleur hôte USB (122) dudit réseau USB (120) ;
**caractérisé par** l'étape suivante :
détecter le passage de ladite demande de déclencheur avec un moteur de déclencheur (110) situé dans ledit réseau USB ; et
ledit moteur de déclencheur (110) répondant à une détection de ladite demande de déclencheur en transmettant un message de commande de déclencheur en aval vers lesdits seconds dispositifs USB (128, 130).

14. Procédé tel que revendiqué dans la revendication 13, comprenant en outre les étapes suivantes :
ouvrir un canal de communication entre un contrôleur hôte USB (122) et ladite pluralité de dispositifs USB (128, 130) ; et
insérer ladite commande de déclencheur dans un paquet de données passant en aval dans ledit canal de communication.

15. Procédé tel que revendiqué dans la revendication 13, comprenant en outre les étapes suivantes :
déconnecter de manière sélective ladite pluralité de dispositifs USB en amont dudit moteur de déclencheur (110) ; et
transmettre ladite commande de déclencheur en aval dudit moteur de déclencheur (110).

16. Procédé tel que revendiqué dans l'une quelconque des revendications 13 à 15, dans lequel lesdits seconds dispositifs USB (128, 130) comprennent des dispositifs non SuperSpeed et ledit message de commande de déclencheur est diffusé par le moteur de déclencheur (110) auxdits dispositifs non SuperSpeed.

17. Procédé tel que revendiqué dans l'une quelconque des revendications 13 à 15, dans lequel lesdits seconds dispositifs USB (128, 130) comprennent des dispositifs USB SuperSpeed, où ledit moteur de déclencheur (110) transmet de manière sélective ladite commande de déclencheur auxdits dispositifs USB SuperSpeed, chacun desdits dispositifs USB SuperSpeed étant adressé au moyen d'une chaîne de routage USB.

18. Procédé tel que revendiqué dans l'une quelconque des revendications 13 à 17, comprenant en outre les étapes suivantes :
armer une pluralité desdits dispositifs USB (126, 128, 130) pour recevoir des conditions de déclencheur respectives ;
configurer le moteur de déclencheur avec un état de déclencheur combinatoire spécifique, ledit état de déclencheur combinatoire étant une combinaison d'états de déclencheur desdits dispositifs USB (126, 128, 130),
lesdits dispositifs USB détectant lesdites conditions de déclencheur respectives ;
lesdits dispositifs USB (126, 128, 130) transmettant des messages de demande de déclencheur respectifs en amont vers le contrôleur hôte USB (122) dudit réseau USB (120), lesdits messages de demande de déclencheur étant indicatifs d'état de déclencheur respectifs desdits dispositifs USB ;
détecter le passage desdites demandes de déclencheur avec ledit moteur de déclencheur (110) ;
ledit moteur de déclencheur (110) maintenant un enregistrement d'un état de déclencheur de chacun desdits dispositifs USB (126, 128, 130) ;
ledit moteur de déclencheur (110) comparant ledit enregistrement d'état de déclencheur audit état de déclencheur combinatoire ;
ledit moteur de déclencheur (110) transmettant un message de commande de déclencheur vers l'aval auxdits dispositifs USB (126, 128, 130) lorsque ledit état de déclencheur correspond audit état de déclencheur combinatoire.

19. Procédé tel que revendiqué dans la revendication 18, dans lequel ledit état de déclencheur combinatoire inclut une dépendance au temps, telle que des relations temporelles entre des transitions de ladite pluralité respective d'états de déclencheur soient importantes.
